# EUROPEAN PATENT SPECIFICATION

(11) **EP 2 921 341 B1**
(45) Date of publication and mention of the grant of the patent: **20.06.2018**
(21) Application number: 14160482.7
(22) Date of filing: 18.03.2014
(51) Int. Cl.: B60N 2/885

(54) **Adjustable side support**
Einstellbarer Seitenhalter
Support latéral réglable

(43) Date of publication of application: 23.09.2015
(73) Proprietor: Volvo Car Corporation, 40531 Göteborg (SE)
(72) Inventor: Löfqvist, Karl- Johan, 430 84 Styrsö (SE); Zettersten, Jerker, 44331 Lerum (SE)
(74) Representative: Volvo Car Corporation

(56) References cited:
- DE-A1- 10 005 196
- DE-B3- 10 317 036
- FR-A1- 2 927 855
- FR-A1- 2 932 429
- US-A1- 2013 181 496

## Description

### Technical field of the invention

This invention relates to a headrest on a vehicle seat. In particular the invention relates to headrests with lateral support structures which can be adjustably displaced.

### Background of the invention

A headrest on a vehicle seat fills the purpose of providing support for the seat occupant's head, both in terms of comfort and of safety. Naturally, there are therefore requirements set on headrests with standards on safety and comfort to comply with. In addition to such standards there is incentive to further improve on both safety and comfort. A vehicle headrest is often vertically adjustable to accommodate passengers of varying height, and in some vehicles the headrest may also be adjustable in the driving direction of the vehicle. While there are headrests which are formed to provide a lateral support a further possibility to improve the headrest is to develop lateral side supports which are adjustable.

There are headrests that have adjustable lateral side support. A common requirement for such headrests is to comprise a main support structure which is securely arranged to the vehicle seat in order to comply with safety standards and regulations. The adjustable lateral side support may be achieved by swiveling wings, hinged to the main support structure so as to be pivotable about a central vertical swiveling axis or two offset vertical axes. One issue with such swiveling wings is that the adjustment to a preferred position is often drifting over time. This is often attempted to be alleviated with guide rods having friction elements.

DE 10005196 A1 discloses a vertically extending central part which is arranged on the front side of a headrest which is provided on the backrest of a vehicle seat, on the front side of which a support part is braced by a film hinge to the lateral edges of the headrest. A retaining clip is provided on each support part and is encompassed by a toggle spring inserted into the headrest. The holding bracket cooperates with the leg spring in such a way that the support parts are displaced into the rest position (a) by a mere application of the head of the vehicle occupant. In addition, a positioning element can also engage at the end portion of the support part, by means of which the support part is pivoted into the rest position (a) in a controlled manner in a vehicle crash.

FR 2932429 A1 discloses a headrest having a sliding support including a frontal support band surrounded by a liner for forming a longitudinal rest zone elongated for a user head. The band is arranged in an extension of a central part of the headrest, in a deployed position, outside an internal housing. The band is connected with a stiffening frame that controls and guides displacements of the band from its deployed position to a retracted position in the housing or vice versa. The frame is shifted from both sides of the band along depth and towards rear of the central part.

FR 2927855 A1 discloses a headrest having a fixed central part including upper and lower guides with a stop cooperating with a stopping stud provided at ends of upper and lower horizontal rails of a sliding support. The stud is inversed on the rails with respect to the stop so as to permit immobilization of the support on the stop of the guides at the end of travel of the support towards deployed position at right or at left of the central part. The support has a body formed of a plastic support band coated with an outer foam liner and surrounded by textile protective coating.

Furthermore, the cover of the headrest, which may be a fabric or a skin, is generally chafed and wrinkled over time, which is unappealing to the customer and reduces the image of quality for the vehicle as a whole.

It is therefore desirable to improve headrests with adjustable lateral support by providing a headrest with adjustable lateral support which alleviates customer issues with adjustability and perceived quality.

### Summary of the invention

It is an object of the present invention to address the shortcomings of the prior art, and to provide an improved headrest with adjustable lateral support which better maintains adjustments and which also allows the cover to last longer.

According to a first aspect of the invention, these and other objects are achieved with a headrest for a vehicle seat comprising a central base member. The central base member comprising two guide elements arranged on opposite lateral side portions of the central base member, relative to each other. The headrest further comprising two lateral support members, which are connected to and guided by the guide elements, wherein the lateral support members are displaceable relative to the central base member. The headrest further comprising a cushioning element covering a head supporting side of the central base member and the pair of lateral support members, and having a thickness T in a direction perpendicular to the head supporting side, and comprising a cover upholstered over the at least one cushioning element and at least parts of the central base member and the pair of lateral support members. Each guide element is curved so that each lateral support member is rotatable around a respective axis A, B. The head support is substantially planar and each respective axis A, B is substantially parallel with the head supporting side. The first aspect of the invention is characterized in that each respective axis A, B is arranged in front of the head supporting side of the central base member and the pair of lateral support members.

By designing a structure which displaces the rotational axes to locations in front of the central base member and the lateral support members the chafing and wrinkling of the cover is reduced or almost eliminated compared to headrests with adjustable lateral supports which have structures which swivel around a hinge on which the lateral supports are arranged. The arched guide elements allow the lateral supports to rotate around an axle located at a distance from the guide element corresponding to the radius of curvature of the arch. Therefore, the arch of the guide elements can be adapted to the preferred thickness of the cushioning element, or vice versa the cushioning element may be adapted to the arch of the guide element. According to at least one embodiment of the invention each guide element is curved so that each lateral support member is rotatable around an axis A, B arranged in front of and within a distance between T/2 and 3T/2 from the head supporting side of the central base member and the pair of lateral support members, or within a distance of 2T/3 and 4T/3 or at a distance T ± 0.1 T from the head supporting side of the central base member and the pair of lateral support members.

Furthermore, as the rotational axes are arranged to substantially coincide with the cover, and consequently the front surface of the cushioning element, the compression of the cushioning element is greatly reduced or eliminated. This means that any adjustment of the lateral supports members is not resiliently pre-loaded, so that the requirements on any friction locking of the lateral support adjustment are reduced.

According to at least one embodiment of the invention each respective axis A, B diverges from an axis parallel with the head supporting side with an angle not greater than ±10°, or greater than ±5° or greater than ±2°. While a smaller tolerance still provides a benefit of reduced chafing of the cover and compression of the cushioning element, the reductions are greater as the rotational axes are more parallel with the head supporting side, and also the surface of the cover.

According to another embodiment of the invention the cushioning element comprises three cushioning members, which are respectively arranged adjacent to one of the lateral support members or the central base member, and wherein the cushioning members, respectively arranged adjacent to the lateral support members, are rotatable around the axis A, B relative to the cushioning member arranged adjacent to the central base member. The cushioning element may for example be cut into three members along two parallel planes, preferably leaving a thin joint closest to the forward surface, so that the three cushioning members are pair wise interconnected with a living hinge. Within the context of the invention a living hinge is a thin flexible hinge (flexure bearing) made from the same material as the two members it connects. It is typically thinned or cut to allow the rigid pieces to bend along the line of the hinge. The cushioning element may also be manufactured with three members joint together by two living hinges in a single process. While the cushioning members may be three completely separated pieces, there are manufacturing and logistical advantages to having a cushioning element with joint cushioning members. For example there would only be a need for a single article number for each model of headrest and each element could be handled more easily compared to the fastening of three separate members. When the three cushioning members are joint only by a hinge or completely separated on the respective lateral support member or central base member the stress or stretching between the members is reduced compared to a single elastic cushioning member arranged over both lateral support members and the central base member. If the three cushioning members are joint only by two living hinges coinciding with the respective rotationa axis the forces between the three cushioning members are reduced or eliminated and an even surface is provided facing the front where the cover is upholstered, as the lateral support members are displaced along the guide members and rotate around the respective axes. According to one embodiment the three cushioning members are formed to cover the overall head supporting side of the central base member and the lateral support members, wherein each cushioning member is formed to match the central base member or lateral support member to which it is adjacently arranged. Each cushioning member may be arranged adjacent to one of the central base member or the lateral support members such that the respective cushioning member is sufficiently fixated to maintain its position at least during upholstering. For example the respective cushioning member may be adhered with an adhesive, anchored with a snap fit or with a clamp, or a combination thereof.

According to one embodiment of the invention each lateral support member further comprises a mating track, which engages with the respective guide element. The mating track provides alignment and support in vertical, lateral and front/rear directions as the guide elements are inserted into the mating tracks. Additionally or alternatively, the headrest comprises at least one roller, rotatably arranged to the central base member such that the at least one roller engages with the mating track. The at least one roller may be provided with a friction device, which imparts a frictional resistance to rotational movement of the at least one roller. The friction device allows adjustments made to the displacement and conequently rotation of the lateral support members to be more resilient to unintentional adjustment. In order to adjust the lateral support members the frictional resistance needs to be overcome, which reduces unintentional adjustment. The at least one roller may also or alternatively be provided with an actuator, which imparts a rotational movement to the at least one roller. The actuator, for example an electrical motor may be controlled by a user interface or an automatic controller to adjust the lateral support members to a preferred position. This allows electric adjustment of the lateral support for the driver or automatic adjustment as a response to for example a signal indicative of an imminent collision. The mating track and the at least one roller may be mutually provided with cogs. The cogs may allow improved engagement between the mating track and the at least one roller.

According to another embodiment the lateral support structure, the mating track and the cogs on the mating tracks are manufactured in one piece. Additionally or alternatively, the central base member and the two guide elements are manufactured in one piece. In the context of the invention manufactured in one piece should be understood as manufactured in a process resulting in a single piece where the comprised parts need no additional attachment. For example a casting process, an injection molding process or a 3D-printing process.

### Brief Description of Drawings

These and other aspects of the present invention will now be described in more detail, with reference to the appended drawings showing exemplary embodiments of the invention, wherein:
Fig. 1 shows a perspective rear view of a headrest according to an exemplary embodiment of the invention, having lateral supports in closed position;
Fig. 2 shows a perspective rear view of the headrest shown in Fig. 1, having the lateral supports in open position; Fig. 2 also shows an alternative embodiment of the headrest;
Fig. 3 shows a detailed view of a headrest structure of one exemplary embodiment of the invention; and
Fig 4. shows a detailed view of a headrest structure of one exemplary embodiment of the invention, from an upside down perspective relative to the view shown in Fig. 3

### Detailed Description of Embodiments of the Invention

In the following detailed description, preferred embodiments of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations of the invention, for instance. The exemplary embodiment is mainly described with reference to a vehicle equipped with seats having headrests with adjustable lateral supports, whereby references to forward, front, rear, back and the respective sides are made with respect to a car with the driving direction as the forward direction. In the following description the headrest is located on the driver's seat, however other seats are equally conceivable.

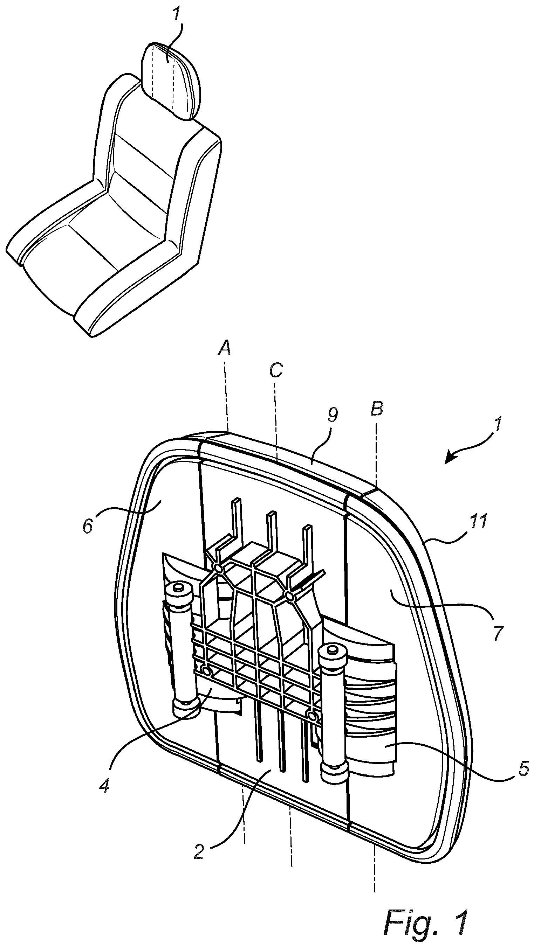

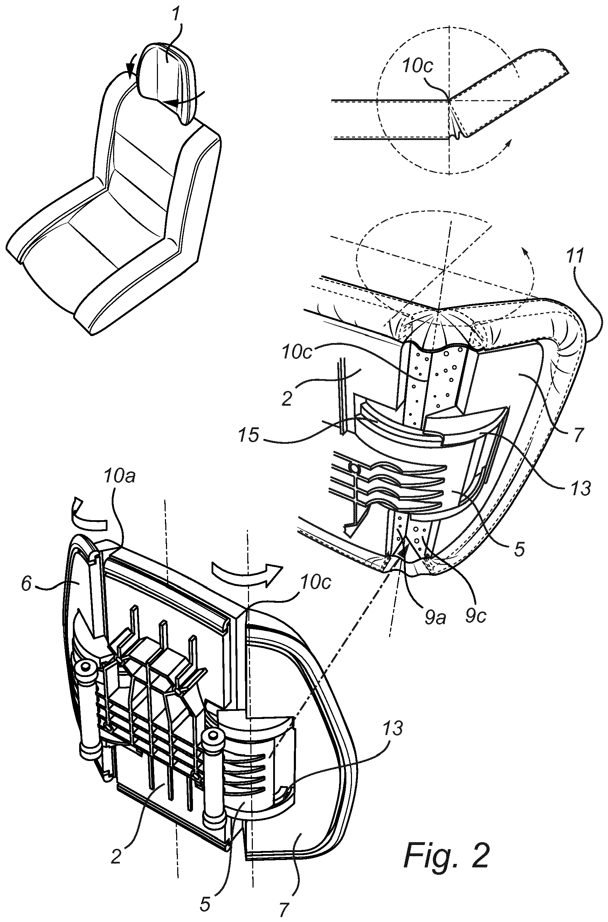

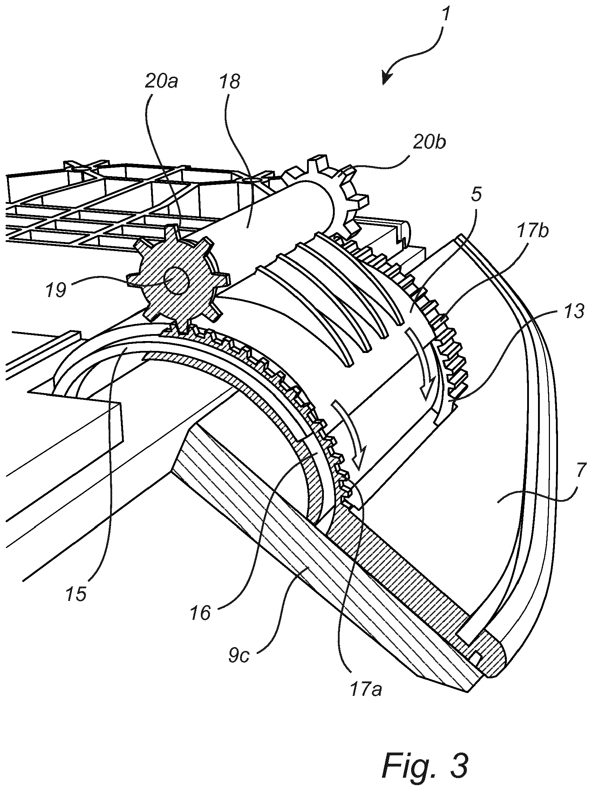

Fig. 1 shows a perspective rear view of a headrest 1 according to an exemplary embodiment of the invention. In Fig. 1 the adjustable lateral supports 4, 5 are closed, i.e. arranged in their most backwards folded position. The central portion of the headrest comprises a central base member 2 which may be cast from a plastic material commonly in appliance with regulations and standards with regards to for example crash safety, flammability and hazardous materials. The central base member 2 is substantially rectangular and has its largest extension in the vertical direction, which is in the up/down directions of the vehicle compartment. Furthermore, the front side 8, also referred to as the head supporting side, has a substantially flat surface for arranging cushioning material to it and to avoid protrusions that may cause discomfort to the driver. On the back of the central base member there are fastening points for arranging the headrest to the seat. The arrangement of the headrest 1 to a vehicle seat is not in the scope of the invention as a person skilled in the art realizes that the arrangement to the seat does not directly affect the headrest as such. One exemplary arrangement of the headrest 1 to the seat is that the vehicle seat is provided with two support rods (not shown) arranged parallel to the back rest of the seat, at the top of the back rest. A holder (not seen) that may be of plastic material is securely attached to the two rods and the headrest 1 is attached to the holder (not seen) by fastening means, such as bolts or screws. According to this specific example the fastening means are anchored to a ribbed structure 3 protruding from the base member 2, which structure 3 also provides rigidity to the base member 2. The support structure 3 extends from the center of the backside of the headrest 1 in both lateral directions and further on to the guide elements 4, 5 which extend from the base member 2. The details of the guide elements 4, 5 are further explained below with reference to Fig. 2 and Fig.3.

Returning to Fig.1 lateral support members 6, 7 are arranged on a respective lateral side of the base member 2. In Fig. 1 the lateral support members 6, 7 are in positions where they are flush to the lateral sides of the central base member 2, and where the substantially flat front side continuously extends to the respective lateral support member so that an substantially planar front surface 8 is formed. In the exemplary embodiment shown in Fig. 1 the front surface 8, or head supporting surface is slightly concave around the vertical axis which allows for a slightly longer extension of the guide elements, this is explained further below with reference to Fig. 2 and Fig. 3. In Fig. 1 the front surface 8 supports a cushioning element 9 which is arranged adjacent to the front surface 8. The cushioning element 9, also referred to as the cushion 9,may be between 10 and 30 mm thick, or between 15 and 25 mm thick or between 17 and 23 mm thick or is roughly 20 mm thick, when viewed from above. The cushion comprises three portions or members 9a, 9b, 9c, which each is arranged adjacent to the surface of one of the lateral support members 6, 7 or the central base member 2, respectively. The cushion 9 may be formed so that the three portions 9a, 9b, 9c are separate but for a respective connection along the lateral axis which may form a living hinge 10a, 10b. The living hinges 10a, 10b are located on the front side of the cushion, at a distance from the front surface 8 of the central base member, and are substantially coaxial with the respective axis A, B around which the respective lateral support member 6, 7 is rotatable. Over the cushion 9 a leather cover 11 is upholstered such that the front of the cover is smooth. The cover 11 is attached to the back of the lateral support members 6, 7 and the central base member 2 along the edges with clips or wedges (not shown).

Fig. 2 shows the headrest 1 in a more open position. The lateral support members 6, 7 have been displaced along the respective guide element 4, 5 on which it is arranged, showing more clearly that the guide elements 4, 5 are extending from the base member in an arched form. On its own each guide element 4, 5 is formed as a section of a cylindrical outer shell or a section of a tubular member cut along the longitudinal axis where the back corresponds to the outer convex surface. The headrest 1 described in this exemplary embodiment of the invention is symmetrically formed with reference to a cross section between center axis C and a plane defined by the vertical axis and the forward direction. The guide elements 4, 5 extend in the lateral and forward directions from a location which may be vertically slightly offset above the middle off the central base member 2.The extension of the guide elements 4, 5 in the vertical direction is roughly one fourth to one third of the total vertical extension of the central base member 2. The guide elements 4, 5 and the lateral support members 6, 7 may be formed of the same material as the base member and furthermore, the guide elements 4, 5 may be cast as protrusions from the central base member 2 in the same cast. As described with reference to Fig. 1 the protruding structure 3 may extend onto the back side of the guide elements 4, 5 to provide rigidity and to allow support of the lateral support members 6, 7 that slide along the guide elements to open positions where strain is normally greater due to leverage. Along the top and bottom edges of each guide member 4, 5 there are flanges 14, 15 which may enable the respective lateral support member 6, 7 to better align with the guide element 4, 5 by means of mating tracks 12, 13 which are formed on the lateral support members 6, 7. The lateral support members 6, 7 comprises arched mating tracks 12, 13 which engage with the concavely arched front surface of the guide elements 4, 5 and with the flanges 14, 15 of the guide elements 4, 5. The guide elements 4, 5 and the mating tracks 12, 13 are arched so that the axes of rotation A, B is arranged near the front surface of the cover. Hence, as the lateral supports are displaced along the guide elements, the movement of the front cover is substantially reduced or eliminated, compared to when the axes of rotation are arranged closer to the base member as seen from above. In other words, the wrinkling and/or chafing of the cover will be reduced or eliminated. In more detail, looking at a cushion comprising three separate elements, arranged as described above except that there is no hinge between the cushions; during a forward displacement of a lateral element, the two adjacent front corners remain in substantially the same place relative each other, while the two adjacent back corners are separated from each other. The same is true for a cushion comprising hinged cushion portions. Consequently, there is no substantial compression of the cushion elements 9a, 9b, 9c in any position of the guiding elements 4, 5. Thus there is normally no force acting to press a forward adjusted cushion backwards. Normally, the closer the axes of rotation are arranged to the front surface of the cushion, the more the wrinkling and/or chafing of the cover is reduced. However, it is a choice of the designer exactly how close to the front surface the axes are arranged.. In the more open position shown in Fig 2. the cushion portions 9a, 9b, 9c are separated at the rear end, still being pair wise interconnected by their living hinges. The lateral support members 6, 7 are continuously displaceable along the guide elements 4, 5. In the closed position shown in Fig. 1 the lateral support members 6, 7 are flush to the central base member 2 and the guide elements 4, 5 are fully inserted in the mating tracks 12, 13 of the lateral support members 6, 7. As the lateral support members 6, 7 slide along the guide elements 4, 5, the tracks 4, 5 have a gradually decreasing contact area with the lateral support members. Having a concave front surface 8 allows for slightly more contact area in the open positions.

Fig. 3 shows a perspective view in detail of one exemplary embodiment of the headrest 1 where part of the base member 2 and the respective guide element 5 are visible in combination with a cross section of one of the lateral support members 7. The mating track 13 of the lateral support member 7 is seen in a partial cross section made perpendicular to the front surface 8. This view offers an image of the guide element's 5 arched form. The radius of curvature for the arch is correlated to the centre of rotation of the lateral support member 7 as it is displaced along the guide element 5. The mating track 13 engages with the guide elemernt 5, so that front surface of the arch of the guide element 5 slides along arched back surface of the mating track 13. The mating track 13 can consequently distribute any forces and impacts on the lateral support member 7 to the overlapping surfaces of the guide element 5 and the mating track 13. The mating track 13 is formed to engage with the flanges 15 along the top and bottom edges of the guide member 5, as seen in Fig. 3 where the flange 15 slides along a groove 16 in the mating track 13. This provides alignment, vertical- and shear support. In the exemplary embodiment shown in Fig. 3 the mating tracks 13 are provided with cogs or teeth 17a, 17b, as an arched rack gear or a section of a cogwheel. The headrest can therefore be provided with an actuator 18 arranged on the structure 3 substantially coaxial with the respective axis B, having a driving axle 19 on which rollers, here also called cogwheels 20a, 20b are arranged to engage with the cogs 17a, 17b. This enables the lateral support element 7 to for example be electrically adjustable by the driver or to be actuated by an advanced driver assistance system or crash mitigation system to be adjusted to a predetermined system selected based depending on the situation. For example the lateral support element 7 may be adjusted to a fully forward position to provide support in a rollover accident or to be adjusted to a fully backward position to provide a large surface that may absorb a head impact in a frontal collision. The actuator 18 may also be a device adapted to impart a friction to the rollers 20a, 20b, allowing an adjustment to the lateral support element 7 to be more resistive to unintentional change. This is achieved by a minimum force which is required to overcome the friction imparted by such a device. Such a device may for example comprise a spring to load the axle 19, or a friction element surrounding the axle 19. The opposite lateral side of the headrest 1, not shown in Fig. 3, may be considered symmetrical to the side seen in Fig. 3, so that all features described have corresponding features comprised on the opposite lateral side.

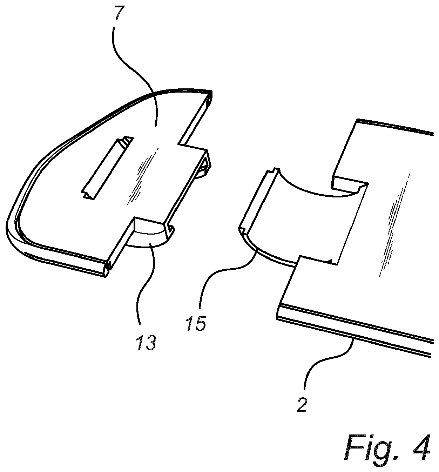

Fig. 4 shows a perspective front view of a detail of an exemplary embodiment of a headrest according to the invention. The lateral support member 7 is disassembled from the guide element 5 to better illustrate the arch of the guide element and how the mating track 13 engages with the guide element 5 by receiving the guide element 5 in a receiving cavity which is provided in the mating track 13 of the lateral support member. The receiving cavity may receive the whole length of the guide element 5, in which position the lateral support member is flush abutted to the central base member 2. The receiving cavity extends to the front surface 8, where the end of the guide element 5 is flush with the front surface 8 allowing a longer extending guide element 5. This allows the lateral support member 7 to rotate more relative to the central base member 2, and provides a longer overlapping support between the mating track 13 and the guide element 5.

Specific embodiments of the invention have now been described. However, several alternatives are possible, as would be apparent for someone skilled in the art. For example, both the central member and the lateral support members may be cast in other materials such as metals, alloys, or individually machined or manufactured from composite materials. The cushion may be arranged to the central base member and the lateral support members respectively by welding, snap fit- or squeeze fit plugs, etc. or it may be held in place by the stretched cover pressing the cushion to the base member and lateral support members. The cushioning element may also for example be securely arranged to only one or two of the base member and lateral support members. Furthermore, in the exemplary embodiment shown in Figs. 1-3 the cushion is formed in one piece with three pair wise interconnected parts. This could also be embodied with three completely separate cushions, or with a number of variations to the living hinges. The hinges could be welded or glued connections instead of formed during casting process. There could be partial connections between the cushion portions along the lateral axis or a connection along the entire lateral extension of the cushion. While for the shown exemplary embodiment the cushion is roughly 20 mm thick the invention is suitable for other thicknesses of cushion as the radius of the guide elements is adjusted. Furthermore, the cushion may have a varying thickness over the surface of the headrest, both for comfort and for aesthetic reasons in order to achieve preferred shapes of the headrest.

While herein described with a cover made from leather, the invention is also well suited to reduce chafing and wrinkling with synthetic skins and fabrics. In other words, the cover may also be made of synthetic skins and fabrics, as well as made of combinations of synthetics and leather. There are also variations to how the cover is arranged to the headrest. The cover may for example be glued, nailed, welded, arranged with Velcro, etc. The cover may also be adhered to the cushion.

In order to improve the perceived quality, look and feel of the headrest, it further comprises a back cover or housing which is not described in any detail here as this may be formed and designed with a large level of freedom without affecting the present invention. For example it may be a flush cover only to the back of the central base member or it may extend to envelope the back and edges of the lateral support members. Furthermore, there may be a bellow connecting to the edges of the lateral support members and the central base member so that the back of the headrest is completely blocked from view and the cover upholstered over the cushion with slits or folds blocked from view. Alternatively, the cover may be integrated in or connected to such a bellow. The protruding rib structure may be at least partly replaced by other means of reinforcement, such as casting with reinforced bars or by the use of other materials for the headrest. In some exemplary embodiments there may be two or more guide elements protruding on each lateral side of the central base member. A contributing rationale for design of the two symmetric guide elements in the exemplary embodiment shown in Fig. 1-3 is tool optimization for casting or injection molding, other tools may lead to different distribution of guide elements. It should also be clear that the guide elements, which are protruding, may be arranged to the lateral support members. Wherein the central base member is then provided with receiving mating tracks on opposite lateral sides of relative to each other.

## Claims

1. Headrest (1) for a vehicle seat comprising:
a central base member (2) comprising:
two guide elements (4, 5) arranged on opposite lateral side portions of said central base member (2), relative to each other; said headrest (1) further comprising:
two lateral support members (6, 7), which are connected to and guided by said guide elements (4, 5), wherein said lateral support members (6, 7) are displaceable relative to said central base member (2);
a cushioning element (9) covering a head supporting side (8) of said central base member (2) and said pair of lateral support members (6, 7), and having a thickness T in a direction perpendicular to said head supporting side (8); and
a cover (11) upholstered over said at least one cushioning element (9) and at least parts of said central base member (2) and said pair of lateral support members (6, 7), wherein each guide element (4, 5) is curved so that each lateral support member is rotatable around a respective axis (A, B),
wherein said head supporting side (8) is substantially planar, and
wherein each respective axis (A, B) is substantially parallel with said head supporting side (8)
**characterized in that**
said respective axis (A, B) is arranged in front of and within a distance between T/2 and 3T/2 from said head supporting side (8) of said central base member (2) and said pair of lateral support members (6, 7).

2. Headrest (1) according to claim 1, wherein said cushioning element (9) comprises three cushioning members (9a, 9b, 9c), which are respectively arranged adjacent to one of said lateral support members (6, 7) or said central base member (2), and wherein said cushioning members (9b, 9c), respectively arranged adjacent to said lateral support members (6, 7), are rotatable around said axis (A, B) relative to said cushioning member (9a) arranged adjacent to said central base member (2).

3. Headrest (1) according to any of the preceding claims, wherein each lateral support member (6, 7) further comprises a mating track (12, 13), which engages with said respective guide element (4, 5).

4. Headrest (1) according to claim 3, further comprising at least one roller (20a, 20b), rotatably arranged to said central base member (2) such that said at least one roller (20a, 20b) engages with said mating track (12, 13), and wherein said at least one roller (20a, 20b) is provided with a friction device, which imparts a frictional resistance to rotational movement of said at least one roller (20a, 20b).

5. Headrest (1) according to any of the claims 3 to 4, further comprising at least one roller (20a, 20b), rotatably arranged to said central base member (2) such that said at least one roller (20a, 20b) engages with said mating track (12, 13), and wherein said at least one roller (20a, 20b) is provided with an actuator (18), which imparts a rotational movement to said at least one roller (20a, 20b).

6. Headrest (1) according to any of the claims 4 to 5, wherein said mating track (12, 13) and said at least one roller (20a, 20b) are mutually provided with cogs.

7. Headrest (1) according to claim 6, wherein said lateral support structure (6, 7), said mating tracks (12, 13) and said cogs (17a, 17b) are manufactured in one piece.

8. Headrest (1) according to any of the preceding claims, wherein said central base member (2) and said two guide elements (4, 5) are manufactured in one piece.

## Patentansprüche

1. Kopfstütze (1) für einen Fahrzeugsitz, umfassend:
ein zentrales Basiselement (2), umfassend:
zwei Führungselemente (4, 5), die an gegenüberliegenden seitlichen Seitenabschnitten des zentralen Basiselements (2) im Verhältnis zueinander angeordnet sind;
wobei die Kopfstütze (1) weiterhin umfasst:
zwei seitliche Abstützelemente (6, 7), die mit den Führungselementen (4, 5) verbunden und davon geführt sind, wobei die seitlichen Abstützelemente (6, 7) im Verhältnis zum zentralen Basiselement (2) verschiebbar sind;
ein Polsterelement (9), das eine Kopfabstützseite (8) des zentralen Basiselements (2) und das Paar seitlicher Abstützelemente (6, 7) abdeckt und eine Dicke T in einer Richtung senkrecht zur Kopfabstützseite (8) hat; und
eine Abdeckung (11) als Polsterung über dem mindestens einen Polsterelement (9) und mindestens über Teilen des zentralen Basiselements (2) und des Paars seitlicher Abstützelemente (6, 7), wobei jedes Führungselement (4, 5) gekrümmt ist, so dass jedes seitliche Abstützelement um eine jeweilige Achse (A, B) drehbar ist,
wobei die Kopfabstützseite (8) im Wesentlichen planar ist, und
wobei jede jeweilige Achse (A, B) im Wesentlichen parallel zur Kopfabstützseite (8) verläuft,
**dadurch gekennzeichnet, dass**
die jeweilige Achse (A, B) vor und innerhalb einer Distanz zwischen T/2 und 3T/2 von der Kopfabstützseite (8) des zentralen Basiselements (2) und des Paars seitlicher Abstützelemente (6, 7) angeordnet ist.

2. Kopfstütze (1) nach Anspruch 1, wobei das Polsterelement (9) drei Polsterteile (9a, 9b, 9c) umfasst, die jeweils angrenzend an eines der seitlichen Abstützelemente (6, 7) oder des zentralen Basiselements (2) angeordnet sind, und wobei die Polsterteile (9b, 9c), die jeweils angrenzend an die seitlichen Abstützelemente (6, 7) angeordnet sind, um die Achse (A, B) im Verhältnis zum Polsterteil (9a), das angrenzend an das zentrale Basiselement (2) angeordnet ist, drehbar sind.

3. Kopfstütze (1) nach einem der vorstehend aufgeführten Ansprüche, wobei jedes seitliche Abstützelement (6, 7) weiterhin eine Laufbahn (12, 13) umfasst, in die das jeweilige Führungselement (4, 5) eingreift.

4. Kopfstütze (1) nach Anspruch 3, die weiterhin mindestens eine Rolle (20a, 20b) umfasst, die zum zentralen Basiselement (2) drehbar so angeordnet ist, dass die mindestens eine Rolle (20a, 20b) in die Laufbahn (12, 13) eingreift, und wobei die mindestens eine Rolle (20a, 20b) mit einer Reibungsvorrichtung vorgesehen ist, die für einen Reibungswiderstand gegenüber der Drehbewegung der mindestens einen Rolle (20a, 20b) sorgt.

5. Kopfstütze (1) nach einem der Ansprüche 3 bis 4, die weiterhin mindestens eine Rolle (20a, 20b) umfasst, die drehbar zum zentralen Basiselement (2) so angeordnet ist, dass die mindestens eine Rolle (20a, 20b) in die Laufbahn (12, 13) eingreift, und wobei die mindestens eine Rolle (20a, 20b) mit einem Aktuator (18) vorgesehen ist, der für eine Drehbewegung der mindestens einen Rolle (20a, 20b) sorgt.

6. Kopfstütze (1) nach einem der Ansprüche 4 bis 5, wobei die Laufbahn (12, 13) und die mindestens eine Rolle (20a, 20b) gegenseitig mit Zähnen vorgesehen sind.

7. Kopfstütze (1) nach Anspruch 6, wobei die seitliche Abstützstruktur (6, 7), die Laufbahnen (12, 13) und die Zähne (17a, 17b) einteilig hergestellt sind.

8. Kopfstütze (1) nach einem der vorstehend aufgeführten Ansprüche, wobei das zentrale Basiselement (2) und die zwei Führungselemente (4, 5) einteilig hergestellt sind.

## Revendications

1. Appui-tête (1) pour un siège de véhicule, comprenant:
un élément de base central (2) comprenant:
deux éléments de guidage (4, 5) agencés sur des parties latérales opposées dudit élément de base central (2), l'un par rapport à l'autre; ledit appui-tête (1) comprenant en outre:
deux éléments de support latéraux (6, 7) qui sont connectés auxdits et guidés par lesdits éléments de guidage (4, 5), dans lequel lesdits éléments de support latéraux (6, 7) sont déplaçables par rapport audit élément de base central (2);
un élément de rembourrage (9) qui couvre un côté de support de tête (8) dudit élément de base central (2) et de ladite paire d'éléments de support latéraux (6, 7), et qui présente une épaisseur T dans une direction perpendiculaire audit côté de support de tête (8); et
une coiffe (11) capitonnée sur ledit au moins un élément de rembourrage (9) et au moins des parties dudit élément de base central (2) et de ladite paire d'éléments de support latéraux (6, 7), dans lequel chaque élément de guidage (4, 5) est incurvé de telle sorte que chaque élément de support latéral soit rotatif autour d'un axe respectif (A, B),
dans lequel ledit côté de support de tête (8) est sensiblement plan, et
dans lequel chaque axe respectif (A, B) est sensiblement parallèle audit côté de support de tête (8),
**caractérisé en ce que** ledit axe respectif (A, B) est agencé en face de et à l'intérieur d'une distance comprise entre T/2 et 3T/2 dudit côté de support de tête (8) dudit élément de base central (2) et de ladite paire d'éléments de support latéraux (6, 7).

2. Appui-tête (1) selon la revendication 1, dans lequel ledit élément de rembourrage (9) comprend trois éléments de rembourrage (9a, 9b, 9c), qui sont agencés respectivement à proximité de l'un desdits éléments de support latéraux (6, 7) ou dudit élément de base central (2), et dans lequel lesdits éléments de rembourrage (9b, 9c), qui sont agencés respectivement à proximité desdits éléments de support latéraux (6, 7), sont rotatifs autour dudit axe (A, B) par rapport audit élément de rembourrage (9a) qui est agencé à proximité dudit élément de base central (2).

3. Appui-tête (1) selon l'une quelconque des revendications précédentes, dans lequel chaque élément de support latéral (6, 7) comprend en outre une piste d'accouplement (12, 13), qui s'engage avec ledit élément de guidage respectif (4, 5).

4. Appui-tête (1) selon la revendication 3, comprenant en outre au moins un rouleau (20a, 20b) qui est agencé de façon rotative sur ledit élément de base central (2) de telle sorte que ledit au moins un rouleau (20a, 20b) s'engage avec ladite piste d'accouplement (12, 13), et dans lequel ledit au moins un rouleau (20a, 20b) est pourvu d'un dispositif de frottement, qui imprime une résistance de frottement au mouvement rotatif dudit au moins un rouleau (20a, 20b).

5. Appui-tête (1) selon l'une quelconque des revendications 3 à 4, comprenant en outre au moins un rouleau (20a, 20b) qui est agencé de façon rotative sur ledit élément de base central (2) de telle sorte que ledit au moins un rouleau (20a, 20b) s'engage avec ladite piste d'accouplement (12, 13), et dans lequel ledit au moins un rouleau (20a, 20b) est pourvu d'un actionneur (18), qui imprime un mouvement rotatif audit au moins un rouleau (20a, 20b).

6. Appui-tête (1) selon l'une quelconque des revendications 4 à 5, dans lequel ladite piste d'accouplement (12, 13) et ledit au moins un rouleau (20a, 20b) sont mutuellement pourvus de dents.

7. Appui-tête (1) selon la revendication 6, dans lequel ladite structure de support latérale (6, 7), lesdites pistes d'accouplement (12, 13) et lesdites dents (17a, 17b) sont fabriquées d'une seule pièce.

8. Appui-tête (1) selon l'une quelconque des revendications précédentes, dans lequel ledit élément de base central (2) et lesdits deux éléments de guidage (4, 5) sont fabriqués d'une seule pièce.
